(19) Europäisches Patentamt
European Patent Office
Office européen des brevets

(11) EP 4 489 111 A1

(12) EUROPEAN PATENT APPLICATION
published in accordance with Art. 153(4) EPC

(43) Date of publication:
**08.01.2025 Bulletin 2025/02**

(21) Application number: **23759898.2**

(22) Date of filing: **17.02.2023**

(51) International Patent Classification (IPC):
***H01M 4/139*** (2010.01) ***C08L 101/02*** (2006.01)
***H01M 4/13*** (2010.01) ***H01M 4/134*** (2010.01)
***H01M 4/1395*** (2010.01) ***H01M 4/62*** (2006.01)
***H01M 10/052*** (2010.01) ***H01M 10/0566*** (2010.01)

(52) Cooperative Patent Classification (CPC):
**C08L 101/02; H01M 4/13; H01M 4/134; H01M 4/139; H01M 4/1395; H01M 4/62; H01M 10/052; H01M 10/0566;** Y02E 60/10

(86) International application number:
**PCT/JP2023/005855**

(87) International publication number:
**WO 2023/162897 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022 JP 2022030431**

(71) Applicant: **Zeon Corporation**
**Tokyo 100-8246 (JP)**

(72) Inventor: **ADACHI, Yusuke**
**Tokyo 100-8246 (JP)**

(74) Representative: **Maiwald GmbH**
**Elisenhof**
**Elisenstraße 3**
**80335 München (DE)**

# (54) BINDER COMPOSITION FOR SECONDARY BATTERY, SLURRY COMPOSITION FOR SECONDARY BATTERY ELECTRODE, SECONDARY BATTERY ELECTRODE, AND SECONDARY BATTERY

(57) Provided is a binder composition for a secondary battery that is capable of forming an electrode for a secondary battery that has excellent peel strength and inhibition of swelling and that can cause a secondary battery to display excellent cycle characteristics. The binder composition for a secondary battery contains a binder and water. When viscosity of the binder composition for a secondary battery under conditions of a temperature of 25°C, a solid content concentration of 1.0 mass%, and a pH of 8.0 is taken to be $\eta_1$ (mPa·sec) and viscosity of the binder composition for a secondary battery under conditions of a temperature of 25°C, a solid content concentration of 1.0 mass%, and a pH of 13.0 is taken to be $\eta_2$ (mPa·sec), a viscosity change rate, calculated by: viscosity change rate = $\{(\eta_2 - \eta_1)/\eta_1\} \times 100$ [%], is not less than -45% and not more than 50%.

EP 4 489 111 A1

## Description

### TECHNICAL FIELD

The present disclosure relates to a binder composition for a secondary battery, a slurry composition for a secondary battery electrode, an electrode for a secondary battery, and a secondary battery.

### BACKGROUND

Secondary batteries such as lithium ion secondary batteries have characteristics such as compact size, light weight, high energy-density, and the ability to be repeatedly charged and discharged, and are used in a wide range of applications. A secondary battery generally includes electrodes (positive electrode and negative electrode) and a separator that isolates the positive electrode and the negative electrode from each other and prevents short-circuiting between the positive and negative electrodes.

An electrode used in a secondary battery such as a lithium ion secondary battery generally includes a current collector and an electrode mixed material layer formed on the current collector. This electrode mixed material layer is formed by, for example, applying a slurry composition for a secondary battery electrode (hereinafter, also referred to as a "slurry composition") that contains an electrode active material and a binder-containing binder composition for a secondary battery (hereinafter, also referred to as a "binder composition") onto the current collector and drying the applied slurry composition.

In recent years, there have been attempts to improve binder compositions used in the formation of electrode mixed material layers in order to further improve secondary battery performance.

Specifically, Patent Literature (PTL) 1 discloses a binder for a secondary battery electrode that contains a cross-linked polymer obtained through polymerization of a monomer composition containing specific monomers. The binder of PTL 1 is reported to be capable of displaying higher binding capacity than is conventionally the case.

### CITATION LIST

#### Patent Literature

PTL 1: WO2020/017418A1

### SUMMARY

#### (Technical Problem)

There is still room for improvement of the conventional binder composition described above in terms of sufficiently ensuring peel strength of an electrode while also inhibiting swelling of the electrode in accompaniment to repeated charging and discharging (i.e., improving inhibition of swelling of the electrode). It would also be desirable for the conventional binder composition described above to cause a secondary battery to display even better cycle characteristics.

In other words, there is demand for a new technique that improves peel strength and inhibition of swelling of an electrode and that also enhances cycle characteristics of a secondary battery.

Accordingly, one object of the present disclosure is to provide a binder composition for a secondary battery and a slurry composition for a secondary battery electrode that are capable of forming an electrode for a secondary battery that has excellent peel strength and inhibition of swelling and that can cause a secondary battery to display excellent cycle characteristics.

Another object of the present disclosure is to provide an electrode for a secondary battery that has excellent peel strength and inhibition of swelling and that can cause a secondary battery to display excellent cycle characteristics.

Yet another object of the present disclosure is to provide a secondary battery that has excellent cycle characteristics.

#### (Solution to Problem)

The inventor conducted diligent investigation with the aim of solving the problems set forth above. The inventor found that by using a binder composition that contains a binder and water and that has values for viscosity measured under conditions of pH 8.0 and conditions of pH 13.0 that satisfy a specific relationship, it is possible to improve peel strength and inhibition of swelling of an electrode and also to cause a secondary battery to display excellent cycle characteristics, and, in

this manner, the inventor completed the present disclosure.

Specifically, the present disclosure aims to advantageously solve the problems set forth above, and, according to the present disclosure, binder compositions for a secondary battery according to the following {1} to {6}, slurry compositions for a secondary battery electrode according to the following {7} and {8}, an electrode for a secondary battery according to the following {9}, and a secondary battery according to the following {10} are provided.

{1} A binder composition for a secondary battery comprising a binder and water, wherein when viscosity of the binder composition for a secondary battery under conditions of a temperature of 25°C, a solid content concentration of 1.0 mass%, and a pH of 8.0 is taken to be $\eta_1$, in units of mPa·sec, and viscosity of the binder composition for a secondary battery under conditions of a temperature of 25°C, a solid content concentration of 1.0 mass%, and a pH of 13.0 is taken to be $\eta_2$, in units of mPa·sec, a viscosity change rate calculated by formula (I), shown below:

$$\text{viscosity change rate} = \{(\eta_2 - \eta_1)/\eta_1\} \times 100\ [\%] \cdots (\mathrm{I})$$

is not less than -45% and not more than 50%.

The use of a binder composition that contains a binder and water and has a viscosity change rate calculated by formula (I) that is within the range set forth above in this manner enables good production of an electrode having excellent peel strength and inhibition of swelling. Moreover, by using an electrode produced in this manner, it is possible to cause a secondary battery to display excellent cycle characteristics.

Note that the "viscosity change rate" of a binder composition referred to in the present disclosure can, more specifically, be calculated by a method described in the EXAMPLES section of the present specification.

Moreover, "sec" in the present disclosure indicates "seconds".

{2} The binder composition for a secondary battery according to the foregoing {1}, having a thread formation test value of less than 1,600 mPa·sec·cm$^{-1}$ as calculated by formula (II), shown below:

$$\text{thread formation test value (mPa·sec·cm}^{-1}) = 3{,}000\ \text{(mPa·sec)}/\{0.5\ \text{(cm/sec)} \times T\ \text{(sec)}\} \cdots (\mathrm{II}) \qquad (\mathrm{II})$$

when a thread formation test is performed by procedure (1) to (5), described below:

(1) adjust the binder composition for a secondary battery to a pH of 8.0 and a viscosity at a temperature of 25°C of 3,000 mPa·sec;
(2) pour the binder composition for a secondary battery that has been adjusted into a horizontally-placed vessel such that a height from a base of the vessel to a liquid surface of the binder composition for a secondary battery is 4 cm;
(3) insert a rod of 5 mm in diameter that is made of polytetrafluoroethylene into the binder composition for a secondary battery inside of the vessel with the rod perpendicular to the liquid surface of the binder composition for a secondary battery until a lower end of the rod is at a depth of 3 cm from the liquid surface of the binder composition for a secondary battery;
(4) raise the rod in a perpendicular direction relative to the liquid surface of the binder composition for a secondary battery at a speed of 0.5 cm/sec;
(5) measure a time T, in units of seconds, from a point at which the lower end of the rod reaches the liquid surface of the binder composition for a secondary battery while rising until a point at which the binder composition for a secondary battery that is being extended in a vertical direction in accompaniment to rising of the rod is severed due to rising of the rod.

By using a binder composition having a thread formation test value, calculated by formula (II), that is less than the value set forth above in this manner, it is possible to further improve peel strength and inhibition of swelling of an electrode.

Note that the "thread formation test value" of a binder composition referred to in the present disclosure can, more specifically, be calculated by a method described in the EXAMPLES section of the present specification.

{3} The binder composition for a secondary battery according to the foregoing {1} or {2}, wherein the binder is a polymer including a vinyl cross-linkable monomer unit and a structural unit other than the vinyl cross-linkable monomer unit, and the vinyl cross-linkable monomer unit is derived from a vinyl cross-linkable monomer including two or more vinyl groups.

By using a polymer that includes a vinyl cross-linkable monomer unit and a structural unit other than the vinyl cross-linkable monomer unit as the binder in this manner, it is possible to further improve peel strength and inhibition of swelling of an electrode and also to even further enhance cycle characteristics of a secondary battery.

Note that when referring to a "vinyl cross-linkable monomer unit" of a polymer in the present disclosure, this means a structural unit (repeating unit) that is derived from a vinyl cross-linkable monomer including two or more vinyl groups as described above. Moreover, when referring to a "structural unit other than a vinyl cross-linkable monomer unit"

(hereinafter, also referred to simply as "another structural unit") of a polymer in the present disclosure, this means a structural unit that is derived from a monomer other than a vinyl cross-linkable monomer (hereinafter, also referred to simply as "another monomer").

{4} The binder composition for a secondary battery according to the foregoing {3}, wherein proportional content of the vinyl cross-linkable monomer unit in the polymer is not less than 0.3 mass% and not more than 55 mass% when all structural units included in the polymer are taken to be 100 mass%.

When the proportional content of the vinyl cross-linkable monomer unit in the polymer used as the binder is within the range set forth above in this manner, inhibition of swelling of an electrode can be further improved, and cycle characteristics of a secondary battery can be even further enhanced.

Note that the proportional content of each type of structural unit in a polymer referred to in the present disclosure can be measured by a nuclear magnetic resonance (NMR) method such as $^{1}$H-NMR or $^{13}$C-NMR.

{5} The binder composition for a secondary battery according to the foregoing {3} or {4}, wherein the structural unit other than the vinyl cross-linkable monomer unit includes one or more functional groups selected from the group consisting of a nitrogen-containing functional group, an oxygen-containing functional group, a sulfur-containing functional group, and a hydrocarbon-based functional group.

When the other structural unit includes one or more functional groups selected from the group consisting of a nitrogen-containing functional group, an oxygen-containing functional group, a sulfur-containing functional group, and a hydrocarbon-based functional group in this manner, peel strength and inhibition of swelling of an electrode can be further improved, and cycle characteristics of a secondary battery can be even further enhanced.

{6} The binder composition for a secondary battery according to any one of the foregoing {3} to {5}, wherein the vinyl cross-linkable monomer unit further includes one or more functional groups selected from the group consisting of an aromatic hydrocarbon ring group, a nitrogen-containing functional group, an oxygen-containing functional group, and a sulfur-containing functional group.

When the vinyl cross-linkable monomer unit further includes one or more functional groups selected from the group consisting of an aromatic hydrocarbon ring group, a nitrogen-containing functional group, an oxygen-containing functional group, and a sulfur-containing functional group in this manner, peel strength and inhibition of swelling of an electrode can be further improved, and cycle characteristics of a secondary battery can be even further enhanced.

{7} A slurry composition for a secondary battery electrode comprising: the binder composition for a secondary battery according to any one of the foregoing {1} to {6}; and an electrode active material, wherein the electrode active material includes a silicon-based active material.

Through a slurry composition that contains any one of the binder compositions for a secondary battery set forth above and an electrode active material including a silicon-based active material in this manner, it is possible to improve peel strength and inhibition of swelling of an electrode and to cause a secondary battery to display excellent cycle characteristics.

{8} The slurry composition for a secondary battery electrode according to the foregoing {7}, wherein the silicon-based active material is a Li-doped silicon-based active material.

By using a Li-doped silicon-based active material as the silicon-based active material in this manner, it is possible to reduce Li ions that cannot participate in battery reactions and to even further enhance cycle characteristics of a secondary battery.

{9} An electrode for a secondary battery comprising a current collector and an electrode mixed material layer, wherein the electrode mixed material layer is formed on the current collector using the slurry composition for a secondary battery electrode according to the foregoing {7} or {8}.

An electrode that includes an electrode mixed material layer formed on a current collector using any one of the slurry compositions for a secondary battery electrode set forth above in this manner has excellent peel strength and inhibition of swelling and can cause a secondary battery to display excellent cycle characteristics.

{10} A secondary battery comprising a positive electrode, a negative electrode, a separator, and an electrolyte solution, wherein the negative electrode is the electrode for a secondary battery according to the foregoing {9}.

By using the electrode for a secondary battery set forth above as a negative electrode in this manner, it is possible to produce a secondary battery having excellent cycle characteristics.

(Advantageous Effect)

According to the present disclosure, it is possible to provide a binder composition for a secondary battery and a slurry composition for a secondary battery electrode that are capable of forming an electrode for a secondary battery that has excellent peel strength and inhibition of swelling and that can cause a secondary battery to display excellent cycle characteristics.

Moreover, according to the present disclosure, it is possible to provide an electrode for a secondary battery that has excellent peel strength and inhibition of swelling and that can cause a secondary battery to display excellent cycle

characteristics.

Furthermore, according to the present disclosure, it is possible to provide a secondary battery that has excellent cycle characteristics.

DETAILED DESCRIPTION

The following provides a detailed description of embodiments of the present disclosure.

A presently disclosed binder composition for a secondary battery can be used in an application of producing a battery member of a secondary battery, but is not specifically limited thereto. For example, the presently disclosed binder composition for a secondary battery is particularly suitable for an application of forming an electrode mixed material layer of an electrode for a secondary battery. In other words, the presently disclosed binder composition for a secondary battery can preferably be used to produce a presently disclosed slurry composition for a secondary battery electrode. Moreover, the presently disclosed slurry composition for a secondary battery electrode can be used to form an electrode of a secondary battery such as a lithium ion secondary battery (i.e., an electrode for a secondary battery). Furthermore, a feature of a presently disclosed electrode for a secondary battery is that it includes an electrode mixed material layer formed from the presently disclosed slurry composition for a secondary battery electrode on a current collector. Also, a feature of the presently disclosed secondary battery is that it includes an electrode for a secondary battery that has been produced using the presently disclosed slurry composition for a secondary battery electrode as a negative electrode.

(Binder composition for secondary battery)

The presently disclosed binder composition contains a binder and water as a solvent and may optionally further contain other components.

A feature of the presently disclosed binder composition is that a viscosity change rate calculated by the previously described formula (I) is not less than -45% and not more than 50%.

As a result of the presently disclosed binder composition containing a binder in water and having a viscosity change rate that is within the range set forth above, the binder composition can be used to produce an electrode that has excellent peel strength and inhibition of swelling and that can cause a secondary battery to display excellent cycle characteristics. Although it is not clear why the above-described effects are obtained by using the binder composition set forth above in this manner, the reason for this is presumed to be as follows.

A feature of the presently disclosed binder composition is that a viscosity change rate calculated by formula (I) is not less than -45% and not more than 50%. As indicated by formula (I), the viscosity change rate is a value that expresses the rate of change of the viscosity $\eta_2$ (mPa·sec) of the binder composition under conditions of a temperature of 25°C, a solid content concentration of 1.0 mass%, and a pH of 13.0 relative to the viscosity $\eta_1$ (mPa-sec) of the binder composition under conditions of a temperature of 25°C, a solid content concentration of 1.0 mass%, and a pH of 8.0. In general, when a binder composition and an electrode active material are combined to produce a slurry composition, there are instances in which an alkali component originating from the electrode active material (for example, lithium hydroxide described further below), for example, causes the pH of the system to rise (i.e., in which the pH in the composition is shifted further towards alkaline through addition of the electrode active material). As a consequence of this pH rise, there have been instances in which the production of a slurry composition using a conventional binder composition has resulted in excessive thickening or thinning of the slurry composition. Based on studies conducted by the inventor, one cause of excessive thickening of a slurry composition is thought to be cross-linking of molecular chains of a polymer used as a binder by an alkali component, whereas one cause of excessive thinning of a slurry composition is thought to be alkali hydrolysis of a polymer used as a binder.

In response to the above, the presently disclosed binder composition has a comparatively small viscosity change rate of not less than -45% and not more than 50%, and a polymer that is used as the binder is presumed to have alkali resistance. By using a binder composition that contains a binder having excellent alkali resistance in this manner, it is possible to inhibit excessive thickening or thinning of an obtained slurry composition even in a situation in which the pH of the system shifts from a neutral region to an alkaline region during production of the slurry composition. A slurry composition in which excessive thickening or thinning is inhibited in this manner enables good formation of a uniform electrode mixed material layer on a current collector. Therefore, by using the presently disclosed binder composition, it is possible to improve peel strength of an electrode and also to inhibit swelling of the electrode. Moreover, by using the presently disclosed binder composition, it is possible to produce a secondary battery having excellent cycle characteristics.

<Binder>

The binder holds components such as an electrode active material that are contained in an electrode mixed

material layer formed on a current collector using a slurry composition that contains the binder composition, for example, and thereby prevents shedding of these components from the electrode mixed material layer.

Any polymer can be used as the binder that is contained in the presently disclosed binder composition without any specific limitations so long as it is a polymer that makes it possible to keep the viscosity change rate of the binder composition within the specific range set forth above. Moreover, one binder may be used individually, or two or more binders may be used in combination.

From a viewpoint of further improving peel strength and inhibition of swelling of an electrode and even further enhancing cycle characteristics of a secondary battery, it is preferable that a polymer including a vinyl cross-linkable monomer unit and another structural unit is used as the binder.

Note that the proportion constituted by the polymer including a vinyl cross-linkable monomer unit and another structural unit among all solid content in the binder composition when all solid content in the binder composition is taken to be 100 mass% is preferably not less than 70 mass% and not more than 100 mass%, more preferably not less than 80 mass% and not more than 100 mass%, and even more preferably not less than 90 mass% and not more than 100 mass%.

«Vinyl cross-linkable monomer unit»

No specific limitations are placed on a vinyl cross-linkable monomer that can form the vinyl cross-linkable monomer unit so long as it is a monomer including two or more vinyl groups. One vinyl cross-linkable monomer may be used individually, or two or more vinyl cross-linkable monomers may be used in combination.

In addition to the aforementioned plurality of vinyl groups, it is preferable that the vinyl cross-linkable monomer further includes one or more functional groups selected from the group consisting of an aromatic hydrocarbon ring group, a nitrogen-containing functional group, an oxygen-containing functional group, and a sulfur-containing functional group. In other words, it is preferable that the vinyl cross-linkable monomer unit included in the polymer further includes one or more functional groups selected from the group consisting of an aromatic hydrocarbon ring group, a nitrogen-containing functional group, an oxygen-containing functional group, and a sulfur-containing functional group in addition to a structure derived from a vinyl group.

The aromatic hydrocarbon ring group may preferably be a naphthalene ring group or a benzene ring group, for example.

The nitrogen-containing functional group may preferably be an amino group, an amide group, a nitrile group, or an imide group, for example. Note that a functional group such as an amide group that includes both a nitrogen atom and an oxygen atom is classified as a nitrogen-containing functional group in the present disclosure.

The oxygen-containing functional group may preferably be a carbonyl group (-C(=O)-), an ester group (-C(=O)-O-), or a carboxy group (-C(=O)-OH), for example.

The sulfur-containing functional group may preferably be a sulfo group, for example. Note that a functional group such as a sulfo group that includes both an oxygen atom and a sulfur atom is classified as a sulfur-containing functional group in the present disclosure.

By using a vinyl cross-linkable monomer and vinyl cross-linkable monomer unit that include any of these functional groups, it is possible to further improve peel strength and inhibition of swelling of an electrode and to even further enhance cycle characteristics of a secondary battery. Moreover, from a viewpoint of even further enhancing these effects, the vinyl cross-linkable monomer and vinyl cross-linkable monomer unit preferably include either or both of an aromatic hydrocarbon ring group and a nitrogen-containing functional group, more preferably include one or more selected from the group consisting of a benzene ring group, an amide group, and an amino group, and even more preferably include a benzene ring group.

In one embodiment of the present disclosure, it is preferable that the vinyl cross-linkable monomer and the vinyl cross-linkable monomer unit do not include a structure that readily undergoes alkali hydrolysis (for example, an ester bond (-C(=O)-O-) and/or an ethylene oxide moiety ($-CH_2-CH_2-O-$)) in order to impart good alkali resistance (particularly resistance to alkali hydrolysis) to the polymer serving as the binder.

Specific examples of the vinyl cross-linkable monomer include monomers including two or more vinyl groups and an aromatic hydrocarbon ring group (aromatic-based polyvinyl monomers) such as divinylbenzene and divinylnaphthalene; monomers including two or more vinyl groups and an amide group (amide-based polyvinyl monomers) such as methylenebisacrylamide and N,N',N",N‴-tetraacryloyltriethylenetetramine; monomers including two or more vinyl groups and an ester group (ester-based polyvinyl monomers) such as allyl acrylate, allyl methacrylate, vinyl acrylate, vinyl methacrylate, ethylene glycol dimethacrylate, trimethylolpropane triacrylate, pentaerythritol triacrylate, tetraethylene glycol diacrylate, ethoxylated isocyanuric acid triacrylate, ethoxylated glycerin triacrylate, di(trimethylolpropane) tetraacrylate, ethoxylated pentaerythritol tetraacrylate, dipentaerythritol polyacrylate, and dipentaerythritol hexaacrylate; and conjugated diene monomers such as 1,3-butadiene, isoprene, 2-methyl-1,3-butadiene, 2,3-dimethyl-1,3-butadiene, 2-chloro-1,3-butadiene, substituted linear conjugated pentadienes, and substituted and branched conjugated hexadienes.

Of these vinyl cross-linkable monomers, ethoxylated pentaerythritol tetraacrylate, methylenebisacrylamide,

N,N’,N’’,N‴-tetraacryloyltriethylenetetramine, and divinylbenzene are preferable from a viewpoint of further improving peel strength and inhibition of swelling of an electrode and even further enhancing cycle characteristics of a secondary battery, methylenebisacrylamide, N,N’,N’’,N‴-tetraacryloyltriethylenetetramine, and divinylbenzene are more preferable, N,N’,N",N‴-tetraacryloyltriethylenetetramine and divinylbenzene are even more preferable, and divinylbenzene is particularly preferable.

The proportional content of the vinyl cross-linkable monomer unit in the polymer used as the binder when all structural units included in the polymer (i.e., the total of proportional content of the vinyl cross-linkable monomer unit and proportional content of the other structural unit) are taken to be 100 mass% is preferably 0.3 mass% or more, more preferably 1 mass% or more, even more preferably 5 mass% or more, further preferably 7.4 mass% or more, and particularly preferably 10 mass% or more, and is preferably 55 mass% or less, more preferably 50 mass% or less, even more preferably 40 mass% or less, further preferably 34 mass% or less, and particularly preferably 30 mass% or less. When the proportional content of the vinyl cross-linkable monomer unit in the polymer used as the binder is 0.3 mass% or more with all structural units included in the polymer taken to be 100 mass%, inhibition of swelling of an electrode can be further improved. Moreover, when the proportional content of the vinyl cross-linkable monomer unit in the polymer used as the binder is 55 mass% or less with all structural units included in the polymer taken to be 100 mass%, cycle characteristics of a secondary battery can be even further enhanced.

<<Other structural unit»

The other structural unit is a structural unit that does not correspond to the vinyl cross-linkable monomer unit described above. Moreover, the other structural unit preferably includes one or more functional groups selected from the group consisting of a nitrogen-containing functional group, an oxygen-containing functional group, a sulfur-containing functional group, and a hydrocarbon-based functional group. When the other structural unit includes one or more functional groups selected from the group consisting of a nitrogen-containing functional group, an oxygen-containing functional group, a sulfur-containing functional group, and a hydrocarbon-based functional group, peel strength and inhibition of swelling of an electrode can be further improved, and cycle characteristics of a secondary battery can be even further enhanced.

[Nitrogen-containing functional group]

The nitrogen-containing functional group can be incorporated into the polymer as a nitrogen-containing functional group monomer unit by using a nitrogen-containing functional group monomer (monomer including a nitrogen-containing functional group) in production of the polymer, for example. The nitrogen-containing functional group monomer that can form the nitrogen-containing functional group monomer unit may preferably be a monomer including an amide group, a monomer including a nitrile group, or the like. Note that one nitrogen-containing functional group monomer may be used individually, or two or more nitrogen-containing functional group monomers may be used in combination.

The monomer including an amide group may be acrylamide, methacrylamide, dimethylacrylamide, diethylacrylamide, diacetone acrylamide, or the like, for example.

The monomer including a nitrile group may be acrylonitrile, methacrylonitrile, or the like, for example.

[Oxygen-containing functional group]

The oxygen-containing functional group can be incorporated into the polymer as an oxygen-containing functional group monomer unit by using an oxygen-containing functional group monomer (monomer including an oxygen-containing functional group) in production of the polymer, for example. Alternatively, the oxygen-containing functional group can be produced by performing hydrolysis during production of the polymer. The oxygen-containing functional group monomer that can form the oxygen-containing functional group monomer unit may be a monomer including a carboxy group, a monomer including a hydroxy group, a monomer including a phosphate group, or the like. Note that one oxygen-containing functional group monomer may be used individually, or two or more oxygen-containing functional group monomers may be used in combination.

The monomer including a carboxy group may be a monocarboxylic acid, a derivative of a monocarboxylic acid, a dicarboxylic acid, an acid anhydride of a dicarboxylic acid, or a derivative of a dicarboxylic acid or acid anhydride thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid esters such as methyl allyl maleate, diphenyl

maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride or carboxylic acid ester that produces a carboxy group through hydrolysis can also be used as the monomer including a carboxy group. Note that an acrylic acid ester (ethyl acrylate, methyl acrylate, etc.), a methacrylic acid ester (methyl methacrylate, ethyl methacrylate, etc.), or the like can be used as the carboxylic acid ester without any specific limitations.

The monomer including a hydroxy group may be hydroxymethyl acrylate, hydroxyethyl acrylate, hydroxypropyl acrylate, hydroxybutyl acrylate, hydroxymethyl methacrylate, hydroxyethyl methacrylate, hydroxypropyl methacrylate, hydroxybutyl methacrylate, or vinyl alcohol, for example.

Moreover, a monomer that can produce a hydroxy group through hydrolysis can also be used as the monomer including a hydroxy group. The monomer that produces a hydroxy group through hydrolysis may be a vinyl ester-based monomer such as vinyl formate, vinyl acetate, vinyl propionate, vinyl valerate, vinyl laurate, vinyl stearate, vinyl benzoate, vinyl pivalate, or vinyl versatate. By performing hydrolysis (saponification) of a polymer that includes a vinyl ester-based monomer unit derived from such a vinyl ester-based monomer, it is possible to convert the vinyl ester-based monomer unit to a vinyl alcohol structural unit having the following structure.

[Chem. 1]

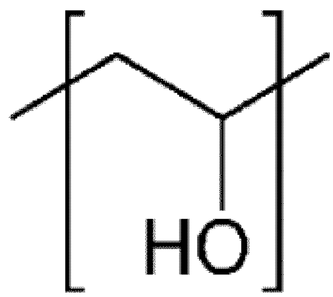

The monomer including a phosphate group may be 2-(meth)acryloyloxyethyl phosphate, methyl-2-(meth) acryloyloxyethyl phosphate, or ethyl-(meth)acryloyloxyethyl phosphate, for example.

Note that in the present disclosure, "(meth)acryloyl" indicates "acryloyl" and/or "methacryloyl".

[Sulfur-containing functional group]

The sulfur-containing functional group can be incorporated into the polymer as a sulfur-containing functional group monomer unit by using a sulfur-containing functional group monomer (monomer including a sulfur-containing functional group) in production of the polymer, for example. The sulfur-containing functional group monomer that can form the sulfur-containing functional group monomer unit may preferably be a monomer including a sulfo group or the like. Note that one sulfur-containing functional group monomer may be used individually, or two or more sulfur-containing functional group monomers may be used in combination.

The monomer including a sulfo group may be styrene sulfonic acid, vinyl sulfonic acid (ethylene sulfonic acid), methyl vinyl sulfonic acid, (meth)allyl sulfonic acid, or 3-allyloxy-2-hydroxypropane sulfonic acid, for example.

Note that in the present disclosure, "(meth)allyl" indicates "allyl" and/or "methallyl".

[Hydrocarbon-based functional group]

The hydrocarbon-based functional group can be incorporated into the polymer as a hydrocarbon-based functional group monomer unit by using a hydrocarbon-based functional group monomer (monomer including a hydrocarbon-based functional group) in production of the polymer, for example. The hydrocarbon-based functional group monomer that can form the hydrocarbon-based functional group monomer unit may be a monomer including a phenyl group ($-C_6H_5$) or the like. Note that one hydrocarbon-based functional group monomer may be used individually, or two or more hydrocarbon-based functional group monomers may be used in combination.

The monomer including a phenyl group may be styrene, α-methylstyrene, or vinyltoluene, for example.

From a viewpoint of further improving peel strength and inhibition of swelling of an electrode and even further enhancing cycle characteristics of a secondary battery, the other structural unit is preferably a monomer unit including a

carboxy group (structural unit including a carboxy group), a monomer unit including an amide group, a monomer unit including a hydroxy group (structural unit including a hydroxy group), or a monomer unit including a sulfo group, more preferably a monomer unit including a carboxy group, a monomer unit including an amide group, or a monomer unit including a hydroxy group, and even more preferably an acrylamide unit, an acrylic acid unit, or a vinyl alcohol structural unit.

In a case in which the polymer serving as the binder includes a monomer unit including an amide group, the proportion constituted by the monomer unit including an amide group in the polymer when all structural units included in the polymer are taken to be 100 mass% is preferably 30 mass% or more, and more preferably 40 mass% or more, and is preferably 90 mass% or less, and more preferably 80 mass% or less. When the proportion constituted by the monomer unit including an amide group in the polymer is 30 mass% or more, peel strength of an electrode can be further improved. Moreover, when the proportion constituted by the monomer unit including an amide group in the polymer is 90 mass% or less, cycle characteristics of a secondary battery can be even further enhanced.

In a case in which the polymer serving as the binder includes a monomer unit including a carboxy group (structural unit including a carboxy group), the proportion constituted by the monomer unit including a carboxy group (structural unit including a carboxy group) in the polymer when all structural units included in the polymer are taken to be 100 mass% is preferably 5 mass% or more, and more preferably 10 mass% or more, and is preferably 60 mass% or less, and more preferably 50 mass% or less. When the proportion constituted by the monomer unit including a carboxy group (structural unit including a carboxy group) in the polymer is 5 mass% or more, cycle characteristics of a secondary battery can be even further enhanced. Moreover, when the proportion constituted by the monomer unit including a carboxy group (structural unit including a carboxy group) in the polymer is 60 mass% or less, peel strength of an electrode can be further improved.

In a case in which the polymer serving as the binder includes a monomer unit including a hydroxy group (structural unit including a hydroxy group), the proportion constituted by the monomer unit including a hydroxy group (structural unit including a hydroxy group) in the polymer when all structural units included in the polymer are taken to be 100 mass% is preferably 10 mass% or more, and more preferably 20 mass% or more, and is preferably 60 mass% or less, and more preferably 40 mass% or less. When the proportion constituted by the monomer unit including a hydroxy group (structural unit including a hydroxy group) in the polymer is 10 mass% or more, peel strength of an electrode can be further improved. Moreover, when the proportion constituted by the monomer unit including a hydroxy group (structural unit including a hydroxy group) in the polymer is 60 mass% or less, cycle characteristics of a secondary battery can be even further enhanced.

<<Properties of binder>>

The polymer used as the binder described above (particularly a polymer that includes a vinyl cross-linkable monomer unit and another structural unit) is preferably water-soluble. By using a polymer that is water-soluble (water-soluble polymer) as the binder, it is possible to further improve peel strength and inhibition of swelling of an electrode and also to even further enhance cycle characteristics of a secondary battery. Note that when a polymer is said to be "water-soluble" in the present disclosure, this means that when 1 g of the polymer is added to 99 g of water under conditions of a temperature of 25°C and is adjusted to a pH of 8.0 (pH adjustment is performed using hydrochloric acid and/or sodium hydroxide), insoluble content of the polymer is less than 1.0 mass%.

<<Production method of binder»

No specific limitations are placed on the method by which the binder formed of the polymer described above is produced. For example, the polymer that is used as the binder may be produced by polymerizing a monomer composition containing the above-described monomers in a solvent and then performing saponification as necessary. The proportional content of each monomer in the monomer composition can be set in accordance with the desired proportional content of each monomer unit (structural unit) in the polymer serving as the binder. Note that in a case in which a polymer that includes a vinyl cross-linkable monomer unit is to be used as the binder, it is preferable from a viewpoint of lowering a thread formation test value of the binder composition that a vinyl cross-linkable monomer is subsequently added into the reaction system once 30 minutes or more (preferably 45 minutes or more), for example, has passed from the start of polymerization as described further below.

The method of polymerization can be solution polymerization, suspension polymerization, bulk polymerization, emulsion polymerization, or the like without any specific limitations. Moreover, any of ionic polymerization, radical polymerization, living radical polymerization, various types of condensation polymerization, addition polymerization, and so forth can be adopted as the polymerization reaction. Known additives such as emulsifiers, dispersants, polymerization initiators, and polymerization accelerators can be used in the polymerization as necessary. The used amounts of these additives can be the same as typically used.

The saponification can be performed by any known method without any specific limitations.

In the case of a reagent used in saponification alkali treatment, sodium hydroxide or lithium hydroxide is preferable from a viewpoint of saponification efficiency. Moreover, the reaction conditions (reaction temperature, reaction time, etc.) in saponification alkali treatment are not specifically limited and can be conditions that are typically adopted in saponification alkali treatment.

The polymer that has undergone saponification can be caused to coagulate through addition of an organic solvent as necessary.

The degree of saponification is preferably 50 mol% or more, more preferably 70 mol% or more, and even more preferably 90 mol% or more. When the degree of saponification is 50 mol% or more, peel strength and inhibition of swelling of an electrode can be further improved, and cycle characteristics of a secondary battery can be even further enhanced. Moreover, the upper limit for the degree of saponification is not specifically limited and can be set as 100 mol% or less, or can be set as 98 mol% or less, for example. Note that the degree of saponification can be adjusted by altering the type and/or amount (concentration) of a reagent used in the saponification alkali treatment.

Furthermore, the "degree of saponification" referred to in the present disclosure can be measured in accordance with JIS K0070.

<Solvent>

The solvent that is contained in the presently disclosed binder composition is not specifically limited so long as it includes water. For example, the presently disclosed binder composition may contain just water as the solvent or may contain a mixture of water and an organic solvent (for example, an ester, a ketone, or an alcohol) as the solvent. Note that the presently disclosed binder composition may contain one organic solvent or may contain two or more organic solvents.

From a viewpoint of further improving peel strength and inhibition of swelling of an electrode and even further enhancing cycle characteristics of a secondary battery, the proportion constituted by water in the solvent contained in the presently disclosed binder composition when the mass of the entire solvent is taken to be 100 mass% is preferably not less than 70 mass% and not more than 100 mass%, more preferably not less than 80 mass% and not more than 100 mass%, even more preferably not less than 90 mass% and not more than 100 mass%, and particularly preferably not less than 95 mass% and not more than 100 mass%.

<Other components>

The presently disclosed binder composition can contain components other than the above-described binder and solvent (i.e., other components). For example, the binder composition may contain known additives so long as the viscosity change rate calculated by formula (I) is within the specific range. Examples of such known additives include thickeners such as carboxymethyl cellulose and salts thereof, antioxidants, defoamers, and dispersants.

One of such other components may be used individually, or two or more of such other components may be used in combination in a freely selected ratio.

<<Properties of binder composition»

[Viscosity change rate]

The presently disclosed binder composition is required to have a viscosity change rate, calculated by the previously described formula (I), of not less than -45% and not more than 50%. The viscosity change rate of the binder composition is preferably -35% or more, more preferably -25% or more, even more preferably -15% or more, and particularly preferably -10% or more, and is preferably 40% or less, more preferably 30% or less, even more preferably 20% or less, further preferably 10% or less, and particularly preferably 5% or less. In a situation in which the viscosity change rate of the binder composition is less than -45%, peel strength and inhibition of swelling of an obtained electrode decrease. On the other hand, in a situation in which the viscosity change rate of the binder composition is more than 50%, cycle characteristics of an obtained secondary battery deteriorate.

Note that the viscosity change rate of the binder composition can be adjusted by altering the types and/or proportional contents of monomer units included in the polymer serving as the binder, for example. Specifically, the absolute value of the viscosity change rate of the binder composition can be reduced by increasing the proportional content of the vinyl cross-linkable monomer unit included in the polymer that is used as the binder. Moreover, the absolute value of the viscosity change rate of the binder composition can also be reduced by using a monomer having excellent alkali resistance (particularly resistance to alkali hydrolysis) as a vinyl cross-linkable monomer forming the vinyl cross-linkable monomer unit included in the polymer that is used as the binder.

No specific limitations are placed on the values of viscosities that are used to calculate the viscosity change rate (i.e., the values of $\eta_1$ and $\eta_2$).

$\eta_1$ is preferably 30 mPa·sec or more, and more preferably 50 mPa·sec or more, and is preferably 8,000 mPa·sec or less, and more preferably 5,000 mPa·sec or less from a viewpoint of further improving peel strength and inhibition of swelling of an electrode and even further enhancing cycle characteristics of a secondary battery.

$\eta_2$ is preferably 30 mPa·sec or more, and more preferably 50 mPa·sec or more, and is preferably 8,000 mPa·sec or less, and more preferably 5,000 mPa·sec or less from a viewpoint of further improving peel strength and inhibition of swelling of an electrode and even further enhancing cycle characteristics of a secondary battery.

[Thread formation]

A thread formation test value for the presently disclosed binder composition, calculated by the previously described formula (II), is preferably less than 1,600 mPa·sec·cm$^{-1}$, more preferably less than 1,500 mPa·sec·cm$^{-1}$, even more preferably less than 1,300 mPa·sec·cm$^{-1}$, and particularly preferably less than 1,200 mPa·sec·cm$^{-1}$, and is preferably 500 mPa·sec·cm$^{-1}$ or more, more preferably 700 mPa·sec·cm$^{-1}$ or more, and even more preferably 900 mPa·sec·cm$^{-1}$ or more. When the thread formation test value of the binder composition is less than 1,600 mPa·sec·cm$^{-1}$, peel strength and inhibition of swelling of an obtained electrode can be further improved. On the other hand, when the thread formation test value of the binder composition is 500 mPa·sec·cm$^{-1}$ or more, cycle characteristics of an obtained secondary battery can be even further enhanced.

Note that the thread formation test value of the binder composition can be adjusted by altering the types and/or proportional contents of monomer units included in the polymer serving as the binder, for example. Specifically, the thread formation test value of the binder composition can be reduced by increasing the proportional content of the vinyl cross-linkable monomer unit included in the polymer that is used as the binder. Moreover, the thread formation test value of the binder composition can also be adjusted by altering the method and/or conditions of production of the polymer used as the binder. Specifically, compared to a case in which polymerization is initiated in a state in which all monomers are present in the reaction system, the thread formation test value of the binder composition can be reduced by subsequently adding a vinyl cross-linkable monomer into the reaction system after 30 minutes or more (preferably 45 minutes or more), for example, has passed from the start of polymerization. Although the reason for this is not clear, it is presumed that by adding the vinyl cross-linkable monomer into the reaction system after a certain amount of time has passed from the start of polymerization, uneven distribution of cross-linked structure-containing moieties arises in the polymer, but (non-cross-linked) molecular chains formed of other structural units increase in length, and interactions between such long molecular chains result in the expression of a thread forming property.

The thread formation test value is a value that is determined by dividing the viscosity of the binder composition (3,000 mPa·sec) by 0.5 (cm/sec) × T (sec) as indicated in formula (II). The denominator (0.5 (cm/sec) × T (sec)) is a value that is determined by multiplying the speed (0.5 cm/sec) at which a rod rises in the thread formation test by the time T (sec) from a point at which the lower end of the rod reaches the liquid surface of the binder composition while rising until a point at which the binder composition is severed due to rising of the rod. Therefore, the denominator of formula (II) can be regarded as a value that expresses the distance (cm) from the liquid surface of the binder composition to the lower end of the rod at the point at which the binder composition is severed. When the binder composition has a higher thread forming property, the binder composition is extended more easily and is less readily severed in the thread formation test. Accordingly, the denominator of formula (II) (i.e., the distance (cm) from the liquid surface of the binder composition to the lower end of the rod at the point at which the binder composition is severed) increases, and the thread formation test value decreases. Moreover, a thread formation test value of less than 1,600 mPa·sec·cm$^{-1}$ means that the binder composition has a good thread forming property and that peel strength and inhibition of swelling of an electrode can be further improved.

<Production of binder composition for secondary battery>

The presently disclosed binder composition for a secondary battery may be produced by mixing the above-described components without any specific limitations. For example, a water dispersion containing the binder that is obtained by a method previously described in the "Production method of binder" section can be used in that form as the binder composition. Alternatively, the water dispersion containing the binder can be used as the binder composition after addition of other components such as described above and mixing by a known method. Specifically, a mixer such as a ball mill, a sand mill, a bead mill, a pigment disperser, a grinding machine, an ultrasonic disperser, a homogenizer, a planetary mixer, or a FILMIX can be used.

(Slurry composition for secondary battery electrode)

The presently disclosed slurry composition for a secondary battery electrode is a composition that is used in an application of forming an electrode mixed material layer, that contains an electrode active material and the presently disclosed binder composition for a secondary battery set forth above, and that optionally further contains other

components. In other words, the presently disclosed slurry composition for a secondary battery electrode normally contains an electrode active material, the previously described binder, and a solvent including water and may optionally further contain other components. The presently disclosed slurry composition can improve peel strength and inhibition of swelling of an electrode and can cause a secondary battery to display excellent cycle characteristics as a result of containing the presently disclosed binder composition set forth above.

Although the following describes, as one example, a case in which the slurry composition for a secondary battery electrode is a slurry composition for a lithium ion secondary battery negative electrode, the presently disclosed slurry composition for a secondary battery electrode is not limited to the following example.

<Electrode active material>

The electrode active material is a material that gives and receives electrons in an electrode of a secondary battery. A negative electrode active material of a lithium ion secondary battery is typically a material that can occlude and release lithium.

The electrode active material that is used in the presently disclosed slurry composition includes a silicon-based active material and may optionally further include an electrode active material other than the silicon-based active material (i.e., another electrode active material).

«Silicon-based active material»

A feature of the electrode active material that is used in the presently disclosed slurry composition is that it includes a silicon-based active material. The use of a silicon-based active material makes it possible to improve the capacity of a secondary battery. On the other hand, silicon-based active materials readily expand and contract due to charging and discharging. However, the presently disclosed slurry composition can sufficiently inhibit swelling of an electrode after cycling even in a case in which a silicon-based active material is used as result of the presently disclosed slurry composition being produced using the presently disclosed binder composition set forth above.

The silicon-based active material may, more specifically, be silicon (Si), a silicon-containing alloy, SiO, $SiO_x$, a composite of a Si-containing material and conductive carbon obtained by coating or combining the Si-containing material with the conductive carbon, or the like, for example. Of these silicon-based active materials, $SiO_x$ is preferable from a viewpoint of increasing the capacity of a secondary battery.

Note that one of these silicon-based active materials may be used individually, or two or more of these silicon-based active materials may be used in combination.

The silicon-containing alloy may, for example, be an alloy composition that contains silicon and one or more elements selected from the group consisting of titanium, iron, cobalt, nickel, and copper.

Alternatively, the silicon-containing alloy may, for example, be an alloy composition that contains silicon, aluminum, and a transition metal such as iron, and further contains a rare-earth element such as tin or yttrium.

$SiO_x$ is a compound that includes Si and at least one of SiO and $SiO_2$, where x is normally not less than 0.01 and less than 2. $SiO_x$ can, for example, be formed by utilizing a disproportionation reaction of silicon monoxide (SiO). Specifically, $SiO_x$ can be prepared by heat-treating SiO, optionally in the presence of a polymer such as polyvinyl alcohol, to produce silicon and silicon dioxide. After SiO has optionally been pulverized and mixed with the polymer, the heat treatment can be performed at a temperature of 900°C or higher, and preferably 1000°C or higher, in an atmosphere containing organic gas and/or vapor.

The composite of a Si-containing material and conductive carbon may be a compound obtained, for example, by heat-treating a pulverized mixture of SiO, a polymer such as polyvinyl alcohol, and optionally a carbon material in an atmosphere containing organic gas and/or vapor. Furthermore, a commonly known method can be used to obtain the aforementioned composite, such as a method of coating the surfaces of particles of SiO with organic gas or the like by chemical vapor deposition, or a method of forming composite particles (granulation) by a mechanochemical process using SiO particles and graphite or artificial graphite.

[Li-doped silicon-based active material]

The silicon-based active material is preferably a lithium (Li) doped silicon-based active material. The term "Li-doped silicon-based active material" refers to a silicon-based active material that has undergone insertion of lithium in advance (also referred to as "pre-doping"). By using a Li-doped silicon-based active material, it is possible to reduce the amount of Li ions that cannot participate in battery reactions and to even further enhance cycle characteristics of a secondary battery.

On the other hand, since Li-doped silicon-based active materials have typically undergone pre-insertion (pre-doping) of lithium as lithium hydroxide, they suffer from a problem that this lithium hydroxide may elute into an aqueous

slurry composition and thereby shift the pH of the slurry composition toward alkaline over time. Moreover, as the pH of the slurry composition shifts toward alkaline, the viscosity of the slurry composition may change due to a polymer that serves as a binder contained in the slurry composition undergoing hydrolysis and/or molecular chains of the polymer being cross-linked by an alkali component. However, as a result of the presently disclosed slurry composition being produced using the presently disclosed binder composition that has a viscosity change rate within a specific range, the presently disclosed slurry composition can inhibit viscosity change thereof even when the pH of the slurry composition shifts toward alkaline.

The Li-doped silicon-based active material is preferably Li-doped $SiO_x$ (i.e., $SiO_x$ pre-doped with lithium) from a viewpoint of increasing the capacity of a secondary battery. Moreover, the Li-doped silicon-based active material may be produced by a known method or may be a commercially available product.

Note that one Li-doped silicon-based active material may be used individually, or two or more Li-doped silicon-based active materials may be used in combination.

<<Other electrode active material»

In addition to the silicon-based active material, the presently disclosed slurry composition may contain an electrode active material other than the silicon-based active material (i.e., another electrode active material) as the electrode active material. The other electrode active material may be a carbon-based negative electrode active material, a non-silicon metal-based negative electrode active material, a negative electrode active material that is a combination thereof, or the like, for example.

The carbon-based negative electrode active material can be defined as an active material that contains carbon as its main framework and into which lithium can be inserted (also referred to as "doping"). The carbon-based negative electrode active material may be a carbonaceous material or a graphitic material, for example.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite. Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

The non-silicon metal-based negative electrode active material is an active material that contains a metal other than Si, the structure of which usually contains an element that allows insertion of lithium, and that has a theoretical electric capacity per unit mass of 500 mAh/g or more when lithium is inserted. Examples of the non-silicon metal-based negative electrode active material include lithium metal, simple substances of metals that can form a lithium alloy (for example, Ag, Al, Ba, Bi, Cu, Ga, Ge, In, Ni, P, Pb, Sb, Sn, Sr, Zn, and Ti) and alloys thereof, and oxides, sulfides, nitrides, silicides, carbides, and phosphides of any of the preceding examples.

The proportion constituted by the silicon-based active material in the electrode active material when the total amount of the electrode active material is taken to be 100 mass% is preferably 5 mass% or more, more preferably 10 mass% or more, and even more preferably 20 mass% or more, and is preferably 50 mass% or less, more preferably 40 mass% or less, and even more preferably 30 mass% or less. When the proportion constituted by the silicon-based active material in the electrode active material is within any of the ranges set forth above, the capacity of a secondary battery can be improved.

<Binder composition>

The binder composition can be the presently disclosed binder composition that contains the previously described binder and a solvent including water and that optionally contains other components such as previously described.

Note that the content of the previously described binder in the slurry composition can be set as not less than 0.5 parts by mass and not more than 15 parts by mass, in terms of solid content, per 100 parts by mass of the electrode active material.

<Other components>

Examples of other components that may be contained in the slurry composition include, but are not specifically limited to, the same other components as may be contained in the presently disclosed binder composition. Moreover, the

slurry composition may further contain a conductive additive such as carbon black. One other component may be used individually, or two or more other components may be used in combination in a freely selected ratio.

<Production of slurry composition for secondary battery electrode>

The slurry composition set forth above can be produced by mixing the above-described components by a known mixing method. Such mixing can be performed using a mixer such as a ball mill, a sand mill, a bead mill, a pigment disperser, a grinding machine, an ultrasonic disperser, a homogenizer, a planetary mixer, or a FILMIX, for example.

(Electrode for secondary battery)

The presently disclosed electrode is an electrode that includes an electrode mixed material layer formed using the presently disclosed slurry composition set forth above. The presently disclosed electrode includes a current collector and an electrode mixed material layer formed on the current collector. The electrode mixed material layer is normally a layer that is obtained through drying of the presently disclosed slurry composition, that contains at least an electrode active material and a polymer derived from the previously described binder, and that optionally contains other components.

As a result of the presently disclosed electrode being produced using the presently disclosed slurry composition, the presently disclosed electrode has excellent peel strength and inhibition of swelling and can cause a secondary battery to display excellent cycle characteristics.

<Formation method of electrode for secondary battery>

The electrode mixed material layer of the presently disclosed electrode can be formed by any of the following methods, for example.

(1) A method in which the presently disclosed slurry composition is applied onto the surface of the current collector and is then dried
(2) A method in which the current collector is immersed in the presently disclosed slurry composition and is then dried
(3) A method in which the presently disclosed slurry composition is applied onto a releasable substrate and is dried to produce an electrode mixed material layer that is then transferred onto the current collector

Of these methods, method (1) is particularly preferable since it allows simple control of the thickness of the electrode mixed material layer. In more detail, method (1) includes a step of applying the slurry composition onto the current collector (application step) and a step of drying the slurry composition that has been applied onto the current collector to form an electrode mixed material layer on the current collector (drying step).

«Application step»

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. Of these materials, copper foil is particularly preferable as a current collector for a negative electrode. One of these materials may be used individually, or two or more of these materials may be used in combination in a freely selected ratio.

<<Drying step»

The slurry composition on the current collector can be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, an electrode mixed material layer can be formed on the current collector to thereby obtain an electrode that includes the current collector and the electrode mixed material layer.

After the drying step, the electrode mixed material layer may be further subjected to a pressing process, such as

mold pressing or roll pressing. This pressing process can further improve peel strength of the electrode and enables densification of the obtained electrode mixed material layer.

(Secondary battery)

The presently disclosed secondary battery includes a positive electrode, a negative electrode, an electrolyte solution, and a separator, wherein the presently disclosed electrode for a secondary battery set forth above is used as the negative electrode. Moreover, the presently disclosed secondary battery has excellent cycle characteristics as a result of including the presently disclosed electrode for a secondary battery.

Although the following describes, as one example, a case in which the secondary battery is a lithium ion secondary battery, the presently disclosed secondary battery is not limited to the following example.

<Positive electrode>

Examples of positive electrodes that can be used in the presently disclosed secondary battery include known positive electrodes that are used in production of secondary batteries without any specific limitations. Specifically, a positive electrode that is obtained by forming a positive electrode mixed material layer on a current collector by a known production method can be used.

<Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable as they readily dissolve in solvents and exhibit a high degree of dissociation. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), ethyl methyl carbonate (EMC), and vinylene carbonate (VC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region. In general, lithium ion conductivity tends to increase when a solvent having a low viscosity is used. Therefore, lithium ion conductivity can be adjusted through the type of solvent that is used.

The concentration of the electrolyte in the electrolyte solution can be adjusted as appropriate. Furthermore, known additives may be added to the electrolyte solution.

<Separator>

Examples of separators that can be used include, but are not specifically limited to, those described in JP2012-204303A. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

<Production method of secondary battery>

The presently disclosed secondary battery can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In the presently disclosed secondary battery, the presently disclosed electrode for a secondary battery set forth above is used as the negative electrode. Note that in order to prevent pressure increase inside the secondary battery and occurrence of overcharging or overdischarging, an overcurrent preventing device such as a fuse or a PTC device; an expanded metal; or a lead plate may be provided in the

presently disclosed secondary battery as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through polymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

Furthermore, in the examples and comparative examples, the following methods were used to evaluate the thread formation test value and viscosity change rate of a binder composition, the viscosity change rate of a slurry composition, the peel strength and inhibition of swelling of an electrode, and the cycle characteristics of a secondary battery.

<Thread formation test value of binder composition>

A thread formation test was performed according to procedure (1) to (5), described below.

(1) Adjust the pH at 25°C of a binder composition produced in each example or comparative example to 8.0 and adjust the solid content concentration of the binder composition such that the viscosity measured using a B-type viscometer under conditions of a temperature of 25°C, a spindle rotation speed of 60 rpm, and a spindle rotation time of 60 seconds is 3,000 (mPa·sec). Note that adjustment of the pH and solid content concentration of the binder composition can be performed by a method such as addition of hydrochloric acid aqueous solution, nitric acid aqueous solution, sulfuric acid aqueous solution, lithium hydroxide aqueous solution, sodium hydroxide aqueous solution, and/or water or vaporization of solvent (particularly water).
(2) Pour the binder composition that has undergone adjustment of pH and solid content concentration into a vessel that is placed horizontally such that the height from the base of the vessel to the liquid surface of the binder composition is 4 cm.
(3) Install a rod of 5 mm in diameter that is made of polytetrafluoroethylene in a measurement instrument capable of upward and downward displacement at a constant speed (for example, an EMX series produced by Imada Co., Ltd.). Insert the installed rod into the binder composition inside of the vessel with the rod perpendicular to the liquid surface of the binder composition until a lower end of the rod is at a depth of 3 cm from the liquid surface of the binder composition.
(4) Raise the rod in a perpendicular direction relative to the liquid surface of the binder composition at a speed of 0.5 cm/sec.
(5) Measure the time T (sec) from a "point at which the lower end of the rod reaches the liquid surface of the binder composition while rising" until a "point at which the binder composition that is being extended in a vertical direction in accompaniment to rising of the rod is severed due to rising of the rod".

A thread formation test value ($mPa \cdot sec \cdot cm^{-1}$) is then calculated by the following formula.

$$\text{Thread formation test value } (mPa \cdot sec \cdot cm^{-1}) = 3{,}000\ (mPa \cdot sec)/\{0.5\ (cm/sec) \times T\ (sec)\}$$

<Viscosity change rate of binder composition>

A sample was prepared for a binder composition produced in each example or comparative example by adjusting the solid content concentration to 1.0% and the pH at 25°C to 8.0, and then this sample was left at rest for 1 hour while being kept at a temperature of 25°C. Thereafter, the viscosity $\eta_1$ (mPa·sec) of the sample (pH 8.0) was measured using a B-type viscometer under conditions of a temperature of 25°C, a spindle rotation speed of 60 rpm, and a spindle rotation time of 60 seconds. Next, a separate sample was prepared for the binder composition produced in each example or comparative example by adjusting the solid content concentration to 1.0% and the pH at 25°C to 13.0, and then this sample was left at rest for 1 hour while being kept at a temperature of 25°C. Thereafter, the viscosity $\eta_2$ (mPa·sec) of the sample (pH 13.0) was measured using a B-type viscometer under the same conditions as for the viscosity $\eta_1$ (mPa·sec), and a viscosity change rate $\Delta\eta_3$ (%) of the binder composition was calculated by the following formula.

$$\Delta\eta_3\ (\%) = \{(\eta_2 - \eta_1)/\eta_1\} \times 100$$

Note that adjustment of the pH and solid content concentration of the binder composition can be performed by a method such as addition of hydrochloric acid aqueous solution, nitric acid aqueous solution, sulfuric acid aqueous solution, lithium hydroxide aqueous solution, sodium hydroxide aqueous solution, and/or water or vaporization of solvent (particularly water).

<Viscosity change rate of slurry composition>

The solid content concentration of a slurry composition produced in each example or comparative example was adjusted such that the viscosity measured by a B-type viscometer (temperature: 25°C; spindle rotation speed: 60 rpm; spindle rotation time: 60 seconds) was 3,000 mPa·sec to 4,000 mPa·sec. Next, a sample was prepared by adjusting the pH at 25°C of the slurry composition that had undergone solid content concentration adjustment to 8.0, and then this sample was left at rest for 1 hour while being kept at a temperature of 25°C. Thereafter, the viscosity $\eta_4$ (mPa·sec) of the sample (pH 8.0) was measured using a B-type viscometer under conditions of a temperature of 25°C, a spindle rotation speed of 60 rpm, and a spindle rotation time of 60 seconds. Next, a separate sample was prepared by, with respect to the slurry composition that had undergone solid content concentration adjustment to a viscosity of 3,000 mPa·sec to 4,000 mPa·sec as described above, adjusting the pH at 25°C of the slurry composition to 13.0, and then this sample was left at rest for 1 hour while being kept at a temperature of 25°C. Thereafter, the viscosity $\eta_5$ (mPa·sec) of the sample (pH 13.0) was measured using a B-type viscometer under the same conditions as for the viscosity $\eta_4$ (mPa·sec). A viscosity change rate $\Delta\eta_6$ (%) of the slurry composition was calculated by the following formula.

$$\Delta\eta_6\ (\%) = \{(\eta_5 - \eta_4)/\eta_4\} \times 100$$

An evaluation was made by the following standard.

A: $\Delta\eta_6$ of not less than -30% and less than 30%
B: $\Delta\eta_6$ of not less than -50% and less than -30% or not less than 30% and less than 50%
C: $\Delta\eta_6$ of not less than -80% and less than -50% or not less than 50% and less than 80%
D: $\Delta\eta_6$ of less than -80% or not less than 80%

Note that adjustment of the pH and solid content concentration of the slurry composition can be performed by a method such as addition of hydrochloric acid aqueous solution, nitric acid aqueous solution, sulfuric acid aqueous solution, lithium hydroxide aqueous solution, sodium hydroxide aqueous solution, and/or water or vaporization of solvent (particularly water).

<Peel strength of electrode>

A negative electrode produced in each example or comparative example was cut out as a rectangle of 1 cm in width by 8 cm in length to obtain a test specimen. Next, the test specimen was fixed in place with the surface of the negative electrode mixed material layer facing upward. Cellophane tape (tape in accordance with JIS Z1522) was affixed over the entire surface of the negative electrode mixed material layer of the test specimen that had been fixed in place. Thereafter, the cellophane tape was pulled in a direction at 180° at a speed of 50 mm/min from one end of the test specimen to peel off the cellophane tape, and the stress (N/m) during this peeling was measured. Five measurements were performed in the same manner, and an average value of the measurements was taken to be the peel strength. The peel strength was then evaluated by the following standard. Higher peel strength indicates better close adherence between an electrode mixed material layer and a current collector.

A: Peel strength of 5.0 N/m or more
B: Peel strength of not less than 3.0 N/m and less than 5.0 N/m
C: Peel strength of not less than 2.5 N/m and less than 3.0 N/m
D: Peel strength of less than 2.5 N/m

<Inhibition of swelling of electrode>

With respect to a negative electrode after rolling by roll pressing that was produced in each example or comparative example, a value determined by subtracting the thickness of the current collector from the thickness of

the entire negative electrode was measured using a film thickness meter, and this value was taken to be the pre-cycling negative electrode thickness (L1).

A secondary battery produced in each example or comparative example was left at rest at a temperature of 25°C for 6 hours after injection of electrolyte solution. The rested secondary battery was charged for 100 minutes by a 0.1C constant-current method in an environment having a temperature of 25°C. Next, the charged secondary battery was subjected to 12 hours of aging in an environment having a temperature of 60°C. Thereafter, the secondary battery that had been subjected to aging was subjected to a charge/discharge operation of charging to a cell voltage of 4.20 V and discharging to a cell voltage of 2.75 V by a 0.5C constant-current method in an environment having a temperature of 25°C, and this charging and discharging was repeated for 100 cycles. The secondary battery after 100 cycles was charged to a cell voltage of 4.20 V by a 0.2C constant-current method in an environment having a temperature of 25°C, and the secondary battery was subsequently dismantled inside of a glove box to remove the negative electrode. The removed negative electrode was washed with diethyl carbonate, a value determined by subtracting the thickness of the current collector from the thickness of the entire negative electrode was measured using a film thickness meter, and this value was taken to be the post-cycling negative electrode thickness (L2). A rate of change L3 (%) of the post-cycling negative electrode thickness (L2) relative to the pre-cycling negative electrode thickness (L1) was calculated by the following formula.

$$L3\ (\%) = \{(L2 - L1)/L1\} \times 100$$

An evaluation was then made by the following standard. Less swelling of an electrode after cycling indicates that the structure of an electrode mixed material layer is maintained even upon repeated charge/discharge cycling and that a secondary battery has long service life.

A: L3 of less than 20%
B: L3 of not less than 20% and less than 35%
C: L3 of not less than 35% and less than 50%
D: L3 of 50% or more

<Cycle characteristics of secondary battery>

A secondary battery produced in each example or comparative example was left at rest at a temperature of 25°C for 6 hours after injection of electrolyte solution. Next, the rested secondary battery was charged for 100 minutes by a 0.1C constant-current method in an environment having a temperature of 25°C. Next, the charged secondary battery was subjected to 12 hours of aging in an environment having a temperature of 60°C. Thereafter, the secondary battery that had been subjected to aging was subjected to a charge/discharge operation of charging to a cell voltage of 4.20 V and discharging to a cell voltage of 2.75 V by a 0.5C constant-current method in a 25°C environment, and the initial capacity C0 was measured. This charging and discharging was further repeated, and the capacity C1 after 100 cycles was measured. A capacity maintenance rate C2 was calculated by the following formula.

$$C2\ (\%) = (C1/C0) \times 100$$

A larger value for this capacity maintenance rate C2 indicates better cycle characteristics.

A: Capacity maintenance rate C2 of 90% or more
B: Capacity maintenance rate C2 of not less than 85% and less than 90%
C: Capacity maintenance rate C2 of not less than 80% and less than 85%
D: Capacity maintenance rate C2 of less than 80%

(Example 1)

<Production of binder composition for secondary battery>

A 1 L flask made of glass was charged with 800 parts of deionized water, and then 74.7 parts of acrylamide as a nitrogen-containing functional group monomer and 24.8 parts of acrylic acid as an oxygen-containing functional group monomer were mixed and were injected into the flask. The inside of the flask was purged with nitrogen gas at 1,000 mL/min. The flask was heated to a temperature of 40°C, 25.0 parts of a 1.0% aqueous solution of ascorbic acid as a polymerization accelerator was subsequently added into the flask using a syringe, and, 15 minutes later, 18.0 parts of a

2.0% aqueous solution of potassium persulfate as a polymerization initiator was added into the flask using a syringe to initiate a polymerization reaction.

One hour after addition of the polymerization initiator, 50 parts of a 1% aqueous solution of methylenebisacrylamide as a vinyl cross-linkable monomer (0.5 parts in terms of solid content of methylenebisacrylamide) was added into the flask. Four hours after addition of the polymerization initiator, 4.4 parts of a 2.0% aqueous solution of potassium persulfate as a polymerization initiator was supplemented into the flask, 11.1 parts of a 1.0% aqueous solution of ascorbic acid as a polymerization accelerator was further supplemented into the flask, and the temperature was raised to 60°C to cause the polymerization reaction to proceed. Two hours after supplementing of the polymerization initiator, the flask was opened to air to end the polymerization reaction. The obtained polymer was adjusted to pH 8.0 through addition of an 8% aqueous solution of lithium hydroxide monohydrate while performing 6 hours of stirring at a temperature of 25°C to obtain a binder composition. The thread formation test value and viscosity change rate were evaluated for this binder composition. The results are shown in Table 1.

<Production of slurry composition for secondary battery negative electrode>

A planetary mixer equipped with a disper blade was charged with 72.0 parts of artificial graphite as a carbon-based negative electrode active material, 24.0 parts of $SiO_x$ pre-doped with lithium as a silicon-based negative electrode active material, 1.0 parts of carbon black as a conductive additive, and 3.0 parts (in terms of solid content) of the above-described binder composition. These materials were adjusted to a solid content concentration of 61.5% with deionized water and were mixed at room temperature for 50 minutes. After mixing, the solid content concentration was adjusted stepwise to 58% and then 54% with deionized water, and the final solid content concentration was further adjusted such that the viscosity measured by a B-type viscometer (temperature: 25°C; spindle rotation speed: 60 rpm; spindle rotation time: 60 seconds) was 3,000 mPa·sec to 4,000 mPa·sec. The resultant mixture was subjected to defoaming under reduced pressure to yield a slurry composition for a negative electrode having good fluidity. The viscosity change rate was evaluated for this slurry composition. The result is shown in Table 1.

<Formation of negative electrode>

The slurry composition for a secondary battery negative electrode described above was applied onto copper foil (current collector) of 16 μm in thickness by a comma coater such as to have a coating weight of 7.0 mg/cm$^2$. The copper foil with the slurry composition applied thereon was conveyed inside an oven having a temperature of 75°C for 2 minutes and an oven having a temperature of 120°C for 2 minutes at a speed of 0.5 m/min to dry the slurry composition on the copper foil and obtain a negative electrode web. This negative electrode web was rolled by roll pressing to obtain a negative electrode having a negative electrode mixed material layer thickness of 80 μm.

The peel strength was evaluated for the negative electrode obtained by the method described above. Moreover, this negative electrode and a secondary battery described below were used to evaluate inhibition of swelling. The results are shown in Table 1.

<Formation of positive electrode>

A slurry composition for a secondary battery positive electrode (not corresponding to the presently disclosed slurry composition for a secondary battery electrode) was obtained by adding and mixing 96 parts of lithium nickel manganese cobalt oxide as a positive electrode active material, 2 parts in terms of solid content of PVDF (polyvinylidene fluoride) as a binder for a positive electrode mixed material layer, 2 parts of acetylene black as a conductive material, and 20 parts of N-methylpyrrolidone as a solvent in a planetary mixer.

The obtained slurry composition for a secondary battery positive electrode was applied onto aluminum foil (current collector) of 16 μm in thickness by a comma coater such as to have a coating weight after drying of 25.0 mg/cm$^2$. The aluminum foil with the slurry composition for a secondary battery positive electrode applied thereon was conveyed inside an oven having a temperature of 60°C for 2 minutes and an oven having a temperature of 120°C for 2 minutes at a speed of 0.5 m/min to dry the slurry composition for a secondary battery positive electrode on the aluminum foil and obtain a positive electrode web. This positive electrode web was rolled by roll pressing to obtain a positive electrode having a positive electrode mixed material layer thickness of 70 μm.

<Preparation of separator>

A separator made of a single layer of polypropylene (width 65 mm, length 500 mm, thickness 25 μm; produced by dry method; porosity: 55%) was prepared. This separator was cut out as a 5 cm × 5 cm square and was used in a secondary battery described below.

<Production of secondary battery>

An aluminum packing case was prepared as a battery case. The positive electrode was cut out as a 4 cm × 4 cm square and was arranged with the surface at the current collector-side in contact with the aluminum packing case. Next, the square separator was arranged on the surface of the positive electrode mixed material layer of the positive electrode. In addition, the negative electrode was cut out as a 4.2 cm × 4.2 cm square and was arranged on the separator such that the surface at the negative electrode mixed material layer-side faced toward the separator. Thereafter, a $LiPF_6$ solution of 1.0 M in concentration (solvent: mixed solvent of ethylene carbonate (EC)/ethyl methyl carbonate (EMC) = 3/7; additives: containing 2 volume% of vinylene carbonate and 2 weight% of fluoroethylene carbonate) was loaded as an electrolyte solution. The aluminum packing case was then closed by heat sealing at 150°C to tightly seal an opening of the aluminum packing and thereby produce a laminate cell-type secondary battery. Cycle characteristics were evaluated for this secondary battery. The result is shown in Table 1.

(Examples 2 to 5)

A binder composition, a slurry composition, a positive electrode, a negative electrode, a separator, and a secondary battery were prepared or produced in the same way as in Example 1 with the exception that in production of the binder composition, the types and amounts of the vinyl cross-linkable monomer and monomers other than the vinyl cross-linkable monomer were changed as indicated in Table 1. Note that in each case, the vinyl cross-linkable monomer was added into the reaction system 1 hour after the start of the polymerization reaction (i.e., the time at which the polymerization initiator was first added). Evaluations were conducted in the same manner as in Example 1. The results are shown in Table 1.

(Example 6)

A slurry composition, a negative electrode, a positive electrode, a separator, and a secondary battery were prepared or produced in the same way as in Example 1 with the exception that a binder composition for a secondary battery produced as described below was used. Evaluations were conducted in the same manner as in Example 1. The results are shown in Table 1.

<Production of binder composition for secondary battery>

[Polymerization step]

After loading 900 parts of water into a reaction tank of 1 L in capacity that included a stirrer, a thermometer, a $N_2$ gas feeding tube, and a reflux tube, 3.2 parts of sodium sulfite and 27 parts of 1% polyvinyl alcohol aqueous solution were added and dissolved therein. Next, the solution was subjected to 1 hour of bubbling with $N_2$ gas at 1 L/min so as to perform sufficient deaeration of the system, and then heating was performed until the internal temperature reached 60°C. Once the temperature had increased, 1.0 parts in terms of active ingredient of a surfactant (produced by Kao Corporation; product name: NEOPELEX G-15), 27 parts of methyl acrylate as a monomer (oxygen-containing functional group monomer) that produces an oxygen-containing functional group (carboxy group) through hydrolysis, and 48 parts of vinyl acetate as a monomer (oxygen-containing functional group monomer) that produces an oxygen-containing functional group (hydroxy group) through hydrolysis were added and were stirred therewith for 5 minutes. Thereafter, 1.0 parts of PERBUTYL®-O (PERBUTYL is a registered trademark in Japan, other countries, or both; produced by NOF Corporation) was added as a polymerization initiator. At 15 minutes after addition of the polymerization initiator, 0.5 parts in terms of active ingredient of a surfactant (produced by Kao Corporation; product name: NEOPELEX G-15), 25 parts of deionized water, and 25 parts of divinylbenzene as a vinyl cross-linkable monomer were added into the reaction system in a mixed and emulsified form. Polymerization was performed for 4 hours from addition of the polymerization initiator to yield a milky white polymerized product.

[Saponification step]

With respect to 100 parts (in terms of solid content) of the polymerized product obtained as described above, 175 parts of methanol, 175 parts of deionized water (in total combined with water contained in polymerized product), and sodium hydroxide in a weight corresponding to 100 mol% equivalent of the total of methyl acrylate and vinyl acetate to be saponified in the polymer were added, and 4 hours of saponification was performed at 30°C to obtain a solution. Note that in a case in which the polymer did not dissolve, sodium hydroxide was supplemented as appropriate. Thereafter, the saponified solution was added to 1,200 parts of tetrahydrofuran solvent to cause coagulation, coagulated polymer content

was air dried at room temperature, and this coagulated polymer content was finally dissolved in deionized water and was adjusted to pH 8.0 through neutralization with 1% sodium hydroxide aqueous solution.

(Examples 7 to 10)

A binder composition, a slurry composition, a positive electrode, a negative electrode, a separator, and a secondary battery were prepared or produced in the same way as in Example 6 with the exception that in the polymerization step of the binder composition, the charged numbers of parts by mass of the vinyl cross-linkable monomer and monomers other than the vinyl cross-linkable monomer were changed as indicated in Table 3. Note that in each case, the cross-linkable monomer was added into the reaction system in an emulsified state 15 minutes after the start of the polymerization reaction (i.e., the time at which the polymerization initiator was first added). Evaluations were conducted in the same manner as in Example 1. Note that the number of parts by mass of each monomer unit in the binder composition after the saponification step and evaluation results are shown in Table 1.

(Example 11)

A slurry composition, a negative electrode, a positive electrode, a separator, and a secondary battery were prepared or produced in the same way as in Example 1 with the exception that a binder composition for a secondary battery produced as described below was used. Evaluations were conducted in the same manner as in Example 1. The results are shown in Table 2.

<Production of binder composition for secondary battery>

A 1 L flask made of glass was charged with 800 parts of deionized water, and then 74.7 parts of acrylamide as a nitrogen-containing functional group monomer and 24.8 parts of acrylic acid as an oxygen-containing functional group monomer were mixed and were injected into the flask. The inside of the flask was purged with nitrogen gas at 1,000 mL/min. The flask was heated to a temperature of 40°C, 15.0 parts of a 1.0% aqueous solution of ascorbic acid as a polymerization accelerator was subsequently added into the flask using a syringe, and, 15 minutes later, 12.0 parts of a 2.0% aqueous solution of potassium persulfate as a polymerization initiator was added into the flask using a syringe to initiate a polymerization reaction.

One hour after addition of the polymerization initiator, 50 parts of a 1% aqueous solution of N,N',N'',N'''-tetraacryloyltriethylenetetramine (0.5 parts in terms of solid content of N,N',N'',N'''-tetraacryloyltriethylenetetramine) as a vinyl cross-linkable monomer was added into the flask. Four hours after addition of the polymerization initiator, 4.4 parts of a 2.0% aqueous solution of potassium persulfate as a polymerization initiator was supplemented into the flask, 11.1 parts of a 1.0% aqueous solution of ascorbic acid as a polymerization accelerator was further supplemented into the flask, and the temperature was raised to 60°C to cause the polymerization reaction to proceed. Two hours after supplementing of the polymerization initiator, the flask was opened to air to end the polymerization reaction. The obtained polymer was adjusted to pH 8.0 through addition of an 8% aqueous solution of lithium hydroxide monohydrate while performing 6 hours of stirring at a temperature of 25°C to obtain a binder composition.

(Examples 12 and 13)

A binder composition, a slurry composition, a positive electrode, a negative electrode, a separator, and a secondary battery were prepared or produced in the same way as in Example 1 with the exception that in production of the binder composition, the types and amounts of the vinyl cross-linkable monomer and monomers other than the vinyl cross-linkable monomer were changed as indicated in Table 2. Note that in each case, the vinyl cross-linkable monomer was added into the reaction system 1 hour after the start of the polymerization reaction (i.e., the time at which the polymerization initiator was first added). Evaluations were conducted in the same manner as in Example 1. The results are shown in Table 2.

(Example 14)

A binder composition, a slurry composition, a positive electrode, a negative electrode, a separator, and a secondary battery were prepared or produced in the same way as in Example 1 with the exception that in production of the slurry composition, $SiO_x$ that was not doped with Li was used instead of $SiO_x$ doped with Li as a silicon-based active material. Evaluations were conducted in the same manner as in Example 1. The results are shown in Table 2.

(Comparative Example 1)

A slurry composition, a negative electrode, a positive electrode, a separator, and a secondary battery were prepared or produced in the same way as in Example 1 with the exception that a binder composition for a secondary battery produced as described below was used. Evaluations were conducted in the same manner as in Example 1. The results are shown in Table 2.

<Production of binder composition for secondary battery>

After loading 900 parts of water into a reaction tank of 1 L in capacity that included a stirrer, a thermometer, a $N_2$ gas feeding tube, and a reflux tube, 3.2 parts of sodium sulfite and 27 parts of 1% polyvinyl alcohol aqueous solution were added and dissolved therein. Next, the solution was subjected to 1 hour of bubbling with $N_2$ gas at 1 L/min so as to perform sufficient deaeration of the system, and then heating was performed until the internal temperature reached 60°C. Once the temperature had increased, 1.0 parts in terms of active ingredient of a surfactant (produced by Kao Corporation; product name: NEOPELEX G-15), 42 parts of methyl acrylate, and 58 parts of vinyl acetate were added and were stirred therewith for 5 minutes. Thereafter, 1.0 parts of PERBUTYL-O (produced by NOF Corporation) was added as a polymerization initiator. Polymerization was performed for 4 hours from addition of the polymerization initiator to yield a milky white polymerized product. The above-described polymerized product was used as a binder composition without performing a saponification step.

(Comparative Example 2)

A binder composition, a slurry composition, a positive electrode, a negative electrode, a separator, and a secondary battery were prepared or produced in the same way as in Example 1 with the exception that in production of the binder composition, carboxymethyl cellulose sodium salt (produced by Daicel Corporation; product number: DAICEL 2200) was used instead of the binder. The results are shown in Table 2.

(Comparative Example 3)

A slurry composition, a negative electrode, a positive electrode, a separator, and a secondary battery were prepared or produced in the same way as in Example 1 with the exception that a binder composition for a secondary battery produced as described below was used. Evaluations were conducted in the same manner as in Example 1. The results are shown in Table 2.

<Production of binder composition for secondary battery>

A reactor including a stirring blade, a thermometer, a reflux condenser, and a nitrogen feeding tube was used in polymerization. The inside of the reactor was charged with 567 parts of acetonitrile, 2.20 parts of deionized water, 100 parts of acrylic acid as an oxygen-containing functional group monomer, 0.20 parts of trimethylolpropane trimethacrylate as a vinyl cross-linkable monomer, and triethylamine in an amount corresponding to 1.0 mol% relative to the acrylic acid. The inside of the reactor was thoroughly purged with nitrogen and was then heated until the internal temperature reached 55°C. Once stabilization of the internal temperature at 55°C had been confirmed, 0.040 parts of 2,2'-azobis(2,4-dimethylvaleronitrile) (produced by Wako Pure Chemical Industries, Ltd.; product name: V-65) was added as a polymerization initiator, and then a polymerization reaction was continued while maintaining the internal temperature at 55°C. The internal temperature was raised to 65°C at the point at which 6 hours had passed from the start of polymerization. The internal temperature was then maintained at 65°C until 12 hours had passed from the start of polymerization, at which point cooling of the reaction liquid was initiated. Once the internal temperature had dropped to 25°C, 52.5 parts of lithium hydroxide monohydrate was added. After this addition, stirring was continued at room temperature for 12 hours to yield a particle dispersion of polymer particles (Li salt; degree of neutralization: 90 mol%).

The resultant polymerization reaction liquid was subjected to centrifugal separation to cause sedimentation of polymer particles, and then the supernatant was removed. Thereafter, a washing operation of redispersing the sediment in acetonitrile of equal weight to the polymerization reaction liquid, subsequently causing sedimentation of polymer particles by centrifugal separation, and removing a supernatant was repeated twice. The sediment was collected and was subjected to 3 hours of drying under reduced pressure conditions at 80°C so as to remove volatile content and thereby obtain a binder composition.

(Comparative Example 4)

A slurry composition, a negative electrode, a positive electrode, a separator, and a secondary battery were prepared or produced in the same way as in Example 1 with the exception that a binder composition for a secondary battery produced as described below was used. Evaluations were conducted in the same manner as in Example 1. The results are shown in Table 2.

<Production of binder composition for secondary battery>

Polycarbodiimide (PCI) was synthesized by the following method. First, a mixture of 5.00 g of tolylene-2,4-diisocyanate (28 mmol; produced by Tokyo Chemical Industry Co., Ltd.) and 50 mg of 3-methyl-1-phenyl-3-phospholene s-1-oxide (produced by Tokyo Chemical Industry Co., Ltd.) (1.0 mol% relative to tolylene-2,4-diisocyanate) was refluxed at 80°C for 2 hours in 20 mL of tetrahydrofuran under nitrogen and was then filtered to remove insoluble gel. The filtrate was dried under reduced pressure to remove the solvent. A white powder that was obtained in this manner was then purified as follows. (i) The powder was completely dissolved in a minimal amount of tetrahydrofuran, (ii) the tetrahydrofuran solution was poured into 1,000 mL of hexane to cause sedimentation of polymer, and (iii) the polymer was filtered off, collected, and dried under reduced pressure. This procedure (i) to (iii) was repeated twice to finally yield 1.03 g of white polycarbodiimide (PCI) powder (yield: 27%). The molecular weight of the obtained polycarbodiimide (PCI) was 4,000 as Mn (number-average molecular weight) and 11,000 as Mw (weight-average molecular weight).

Next, the polycarbodiimide (PCI) obtained as described above and polyacrylic acid (PAA; Mw = 1,250,000; produced by Sigma-Aldrich) were mixed in a weight ratio of PAA:PCI = 9:1 in the form of an aqueous solution to produce a binder composition.

(Comparative Example 5)

A slurry composition, a negative electrode, a positive electrode, a separator, and a secondary battery were prepared or produced in the same way as in Example 1 with the exception that a binder composition for a secondary battery produced as described below was used. Evaluations were conducted in the same manner as in Example 1. The results are shown in Table 2.

<Production of binder composition for secondary battery>

A four-necked separable flask that included a stirrer, a thermometer, a condenser, a nitrogen feeding tube, and a dropping funnel was charged with 115 parts of deionized water and 1.5 parts of an ammonium sulfonate salt of polyoxyethylene dodecyl ether. Nitrogen was gently passed through the flask while performing stirring at an internal temperature of 68°C to cause complete nitrogen purging of the inside of the reactor. Next, 1.5 parts of a sulfonic acid salt of polyoxyethylene dodecyl ether was dissolved in 92 parts of deionized water. A mixture of 65 parts of ethyl acrylate and 35 parts of methacrylic acid as an oxygen-containing functional group monomer was added thereto to produce a pre-emulsion. The reactor was charged with 5% of this monomer component-containing pre-emulsion, was stirred, and was subsequently charged with 0.017 parts of sodium hydrogen sulfite. Separately thereto, 0.23 parts of ammonium persulfate was dissolved in 23 parts of deionized water to produce a polymerization initiator aqueous solution. The reactor was charged with 5% of the polymerization initiator aqueous solution to perform 20 minutes of initial polymerization. The temperature inside of the reactor was held at 72°C while performing uniform dropwise addition of the remaining pre-emulsion and initiator aqueous solution over 2 hours. After completion of the dropwise addition, the dropping tank was washed with 8 parts of deionized water, which was subsequently added into the reactor. The internal temperature was held at 72°C while continuing stirring for a further 1 hour, and then cooling was performed to quench the reaction to yield an emulsion having a solid content of 30%. With respect to the obtained emulsion (10 parts/3 parts of solid content), 10.2 parts of 5% lithium hydroxide monohydrate aqueous solution and 133.2 parts of deionized water were added and stirred therewith, and then concentrating was performed under reduced pressure to obtain a binder composition having a solid content concentration of 40%.

(Comparative Example 6)

A binder composition, a slurry composition, a positive electrode, a negative electrode, a separator, and a secondary battery were prepared or produced in the same way as in Example 1 with the exception that in production of the binder composition, the types and amounts of the vinyl cross-linkable monomer and monomers other than the vinyl cross-linkable monomer were changed as indicated in Table 2. Note that the cross-linkable monomer was added into the reaction system before the start of the polymerization reaction. Evaluations were conducted in the same manner as in Example 1.

The results are shown in Table 2.
In Tables 1 to 3, shown below:

"AAm" indicates acrylamide unit;
"AA" indicates acrylic acid unit (inclusive of unit obtained through conversion of methyl acrylate unit by saponification);
"MA" indicates methyl acrylate unit (unit not converted to acrylic acid unit by saponification);
"VA" indicates vinyl alcohol structural unit (unit obtained through conversion from vinyl acetate unit by saponification);
"VAM" indicates vinyl acetate unit (unit not converted to vinyl alcohol structural unit through saponification);
"PAA" indicates polyacrylic acid;
"EA" indicates ethyl acrylate unit;
"MAA" indicates methacrylic acid unit;
"BIS" indicates methylenebisacrylamide unit;
"TETA" indicates N,N',N'',N'''-tetraacryloyltriethylenetetramine unit;
"PETA" indicates ethoxylated pentaerythritol tetraacrylate unit;
"DVB" indicates divinylbenzene unit;
"TMP" indicates trimethylolpropane trimethacrylate unit;
"PCI" indicates polycarbodiimide;
"$LiSiO_x$" indicates $SiO_x$ pre-doped with Li; and
"$SiO_x$" indicates $SiO_x$ not pre-doped with Li.

[Table 1]

| | | | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|---|---|
| Slurry composition | Binder composition | Binder | Vinyl cross-linkable monomer unit | Type | BIS | TETA | TETA | TETA | TETA | DVB | DVB | DVB | DVB | DVB |
| | | | | Proportional content [mass%] | 0.5 | 0.5 | 20 | 45 | 7.5 | 34 | 7.4 | 32.7 | 30.5 | 50.5 |
| | | | | Type | - | - | - | - | PETA | - | - | - | - | - |
| | | | | Proportional content [mass%] | - | - | - | - | 7.5 | - | - | - | - | - |
| | | | Other structural units | Type | AAm | AAm | AAm | AAm | AAm | VAM | VAM | VAM | VAM | VAM |
| | | | | Proportional content [mass%] | 74.7 | 74.7 | 58.7 | 30 | 60 | 3.3 | 4.3 | 9.4 | 20.5 | 16.7 |
| | | | | Type | AA | AA | AA | AA | AA | VA | VA | VA | VA | VA |
| | | | | Proportional content [mass%] | 24.8 | 24.8 | 21.3 | 25 | 25 | 31.7 | 41.9 | 27.4 | 19.5 | 10.4 |
| | | | | Type | - | - | - | - | - | MA | MA | MA | MA | MA |
| | | | | Proportional content [mass%] | - | - | - | - | - | 1.8 | 2.7 | 5.3 | 11.5 | 11.1 |
| | | | | Type | - | - | - | - | - | AA | AA | AA | AA | AA |
| | | | | Proportional content [mass%] | - | - | - | - | - | 29.2 | 43.7 | 25.2 | 17.9 | 11.4 |
| | | | Proportional content of vinyl cross-linkable monomer unit [mass%] | | 0.5 | 0.5 | 20 | 45 | 15 | 34 | 7.4 | 32.7 | 30.5 | 50.5 |
| | | | Degree of saponification [mol%] | | - | - | - | - | - | 95 | 95 | 85 | 65 | 55 |
| | | $\eta_1$ [mPasec] (pH 8.0) | | | 3000 | 3000 | 3000 | 3000 | 3000 | 3000 | 3000 | 3000 | 3000 | 3000 |

(continued)

| | | | Example 1 | Example 2 | Example 3 | Example 4 | Example 5 | Example 6 | Example 7 | Example 8 | Example 9 | Example 10 |
|---|---|---|---|---|---|---|---|---|---|---|---|---|
| | | $\eta_2$ [mPa·sec] (pH 13.0) | 2910 | 2850 | 2700 | 2550 | 1650 | 3000 | 3090 | 3300 | 3900 | 4350 |
| | | Viscosity change rate [%] | -3 | -5 | -10 | -15 | -45 | 0 | 3 | 10 | 30 | 45 |
| | | Thread formation test value [mPa·sec·$cm^{-1}$] | 1500 | 1300 | 900 | 300 | 1100 | 900 | 1100 | 900 | 1000 | 500 |
| | Silicon-based active material | | $LiSiO_x$ | $LiSiO_x$ | $LiSiO_x$ | $LiSiO_x$ | $LiSiO_x$ | $LiSiO_x$ | $LiSiO_x$ | $LiSiO_x$ | $LiSiO_x$ | $LiSiO_x$ |
| Evaluation | | Slurry viscosity change rate | A | A | A | A | B | A | A | A | A | B |
| | | Peel strength | B | A | A | B | B | A | A | A | B | B |
| | | Inhibition of swelling | B | B | B | A | B | A | B | A | B | B |
| | | Cycle characteristics | A | A | A | B | B | A | A | B | B | B |

[Table 2]

| | | | | | Example 11 | Example 12 | Example 13 | Example 14 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|
| Slurry composition | Binder composition | Binder | Vinyl cross-linkable monomer unit | Type | TETA | TETA | - | BIS | - | - | TMP | PAA:PCI = 9:1 | - | TETA |
| | | | | Proportional content [mass%] | 0.5 | 60 | - | 0.5 | - | | 0.2 | | - | 7.5 |
| | | | | Type | - | - | - | - | - | | - | | - | PETA |
| | | | | Proportional content [mass%] | - | - | - | - | - | | - | | - | 7.5 |
| | | | Other structural units | Type | AAm | AAm | AAm | AAm | VAM | | AA | | EA | AAm |
| | | | | Proportional content [mass%] | 74.7 | 15 | 76 | 74.7 | 58 | | 100 | | 65 | 60 |
| | | | | Type | AA | AA | AA | AA | MA | | - | | MAA | AA |
| | | | | Proportional content [mass%] | 24.8 | 25 | 24 | 24.8 | 42 | | - | | 35 | 25 |
| | | | Proportional content of vinyl cross-linkable monomer unit [mass%] | | 0.5 | 60 | 0 | 0.5 | 0 | - | 0.2 | - | 0 | 15 |
| | | | Degree of saponification [mol%] | | - | - | - | - | 0 | - | - | - | - | - |
| | | $\eta_1$ [mPa·sec] (pH 8.0) | | | 3000 | 3000 | 3000 | 3000 | 3000 | 3000 | 3000 | 3000 | 3000 | 3000 |
| | | $\eta_2$ [mPa·sec] (pH 13.0) | | | 2910 | 1800 | 2850 | 2910 | 4800 | 1200 | 1500 | 1500 | 1500 | 1050 |
| | | Viscosity change rate [%] | | | -3 | -40 | -5 | -3 | 60 | -60 | -50 | -50 | -50 | -65 |

(continued)

| | | Example 11 | Example 12 | Example 13 | Example 14 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| | Thread formation test value [mPa·sec·cm $^{-1}$] | 1700 | 100 | 1800 | 1500 | 1500 | 700 | 1905 | 2000 | 200 | 400 |
| | Silicon-based active material | $LiSiO_x$ | $LiSiO_x$ | $LiSiO_x$ | $SiO_x$ | $LiSiO_x$ | $LiSiO_x$ | $LiSiO_x$ | $LiSiO_x$ | $LiSiO_x$ | $LiSiO_x$ |
| Evaluation | Slurry viscosity change rate | A | B | A | A | D | D | D | D | D | D |
| | Peel strength | B | B | C | B | B | B | D | D | D | B |
| | Inhibition of swelling | B | B | B | A | B | B | D | D | D | B |
| | Cycle characteristics | A | C | A | B | D | D | B | B | B | D |

[Table 3]

| | | | Example 6 | Example 7 | Example 8 | Example 9 | Example 10 |
|---|---|---|---|---|---|---|---|
| Binder (before saponification) | Vinyl cross-linkable monomer | Type | DVB | DVB | DVB | DVB | DVB |
| | | Charged amount [parts by mass] | 25 | 5 | 25 | 25 | 45 |
| | Other monomers | Type | VAM | VAM | VAM | VAM | VAM |
| | | Charged amount [parts by mass] | 48 | 58 | 48 | 48 | 33 |
| | | Type | MA | MA | MA | MA | MA |
| | | Charged amount [parts by mass] | 27 | 37 | 27 | 27 | 22 |
| | Proportion of vinyl cross-linkable monomer [mass%] | | 25 | 5 | 25 | 25 | 45 |

It can be seen from Tables 1 and 2 that it was possible to produce an electrode having excellent peel strength and inhibition of swelling and a secondary battery having excellent cycle characteristics in Examples 1 to 14 in which the used binder composition contained a binder and water and had a viscosity change rate that was within a specific range.

On the other hand, it can be seen from Table 2 that cycle characteristics of a secondary battery deteriorated in Comparative Examples 1 and 6 in which the used binder composition had a viscosity change rate that was outside of the specific range.

It can also be seen from Table 2 that cycle characteristics of a secondary battery deteriorated in Comparative Example 2 in which the used binder composition did not contain a binder and had a viscosity change rate that was outside of the specific range.

It can also be seen from Table 2 that peel strength and inhibition of swelling of an electrode decreased in Comparative Examples 3 to 5 in which the used binder composition had a viscosity change rate that was outside of the specific range.

INDUSTRIAL APPLICABILITY

According to the present disclosure, it is possible to provide a binder composition for a secondary battery and a slurry composition for a secondary battery electrode that are capable of forming an electrode for a secondary battery that has excellent peel strength and inhibition of swelling and that can cause a secondary battery to display excellent cycle characteristics.

Moreover, according to the present disclosure, it is possible to provide an electrode for a secondary battery that has excellent peel strength and inhibition of swelling and that can cause a secondary battery to display excellent cycle characteristics.

Furthermore, according to the present disclosure, it is possible to provide a secondary battery that has excellent cycle characteristics.

## Claims

**1.** A binder composition for a secondary battery comprising a binder and water, wherein when viscosity of the binder composition for a secondary battery under conditions of a temperature of 25°C, a solid content concentration of 1.0 mass%, and a pH of 8.0 is taken to be $\eta_1$, in units of mPa·sec, and viscosity of the binder composition for a secondary battery under conditions of a temperature of 25°C, a solid content concentration of 1.0 mass%, and a pH of 13.0 is taken to be $\eta_2$, in units of mPa·sec, a viscosity change rate calculated by formula (I), shown below:

$$\text{viscosity change rate} = \{(\eta_2 - \eta_1)/\eta_1\} \times 100\ [\%] \cdots (I)$$

is not less than -45% and not more than 50%.

**2.** The binder composition for a secondary battery according to claim 1, having a thread formation test value of less than 1,600 mPa·sec·$cm^{-1}$ as calculated by formula (II), shown below:

thread formation test value (mPa·sec·$cm^{-1}$) = 3,000 (mPa·sec)/{0.5 (cm/sec) × T (sec)} ··· (II) (II)

when a thread formation test is performed by procedure (1) to (5), described below:

(1) adjust the binder composition for a secondary battery to a pH of 8.0 and a viscosity at a temperature of 25°C of 3,000 mPa·sec;
(2) pour the binder composition for a secondary battery that has been adjusted into a horizontally-placed vessel such that a height from a base of the vessel to a liquid surface of the binder composition for a secondary battery is 4 cm;
(3) insert a rod of 5 mm in diameter that is made of polytetrafluoroethylene into the binder composition for a secondary battery inside of the vessel with the rod perpendicular to the liquid surface of the binder composition for a secondary battery until a lower end of the rod is at a depth of 3 cm from the liquid surface of the binder composition for a secondary battery;
(4) raise the rod in a perpendicular direction relative to the liquid surface of the binder composition for a secondary battery at a speed of 0.5 cm/sec;
(5) measure a time T, in units of seconds, from a point at which the lower end of the rod reaches the liquid surface of the binder composition for a secondary battery while rising until a point at which the binder composition for a secondary battery that is being extended in a vertical direction in accompaniment to rising of the rod is severed due to rising of the rod.

**3.** The binder composition for a secondary battery according to claim 1, wherein

the binder is a polymer including a vinyl cross-linkable monomer unit and a structural unit other than the vinyl cross-linkable monomer unit, and
the vinyl cross-linkable monomer unit is derived from a vinyl cross-linkable monomer including two or more vinyl groups.

**4.** The binder composition for a secondary battery according to claim 3, wherein proportional content of the vinyl cross-linkable monomer unit in the polymer is not less than 0.3 mass% and not more than 55 mass% when all structural units included in the polymer are taken to be 100 mass%.

**5.** The binder composition for a secondary battery according to claim 3, wherein the structural unit other than the vinyl cross-linkable monomer unit includes one or more functional groups selected from the group consisting of a nitrogen-containing functional group, an oxygen-containing functional group, a sulfur-containing functional group, and a hydrocarbon-based functional group.

**6.** The binder composition for a secondary battery according to claim 3, wherein the vinyl cross-linkable monomer unit further includes one or more functional groups selected from the group consisting of an aromatic hydrocarbon ring group, a nitrogen-containing functional group, an oxygen-containing functional group, and a sulfur containing-functional group.

**7.** A slurry composition for a secondary battery electrode comprising: the binder composition for a secondary battery according to claim 1; and an electrode active material, wherein the electrode active material includes a silicon-based active material.

**8.** The slurry composition for a secondary battery electrode according to claim 7, wherein the silicon-based active material is a Li-doped silicon-based active material.

**9.** An electrode for a secondary battery comprising a current collector and an electrode mixed material layer, wherein the electrode mixed material layer is formed on the current collector using the slurry composition for a secondary battery electrode according to claim 7 or 8.

**10.** A secondary battery comprising a positive electrode, a negative electrode, a separator, and an electrolyte solution, wherein the negative electrode is the electrode for a secondary battery according to claim 9.

## INTERNATIONAL SEARCH REPORT

International application No.
**PCT/JP2023/005855**

**A. CLASSIFICATION OF SUBJECT MATTER**

***H01M 4/139***(2010.01)i; ***C08L 101/02***(2006.01)i; ***H01M 4/13***(2010.01)i; ***H01M 4/134***(2010.01)i; ***H01M 4/1395***(2010.01)i; ***H01M 4/62***(2006.01)i; ***H01M 10/052***(2010.01)i; ***H01M 10/0566***(2010.01)i
FI: H01M4/139; C08L101/02; H01M4/13; H01M4/134; H01M4/1395; H01M4/62 Z; H01M10/052; H01M10/0566

According to International Patent Classification (IPC) or to both national classification and IPC

**B. FIELDS SEARCHED**

Minimum documentation searched (classification system followed by classification symbols)

H01M4/139; C08L101/02; H01M4/13; H01M4/134; H01M4/1395; H01M4/62; H01M10/052; H01M10/0566

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2020-123590 A (NIPPON ZEON CO) 13 August 2020 (2020-08-13) paragraph [0105], example 2 | 1-10 |
| X | JP 2017-174660 A (NIPPON ZEON CO) 28 September 2017 (2017-09-28) paragraph [0057], example 7 | 1-10 |
| A | JP 2018-142451 A (SANYO CHEMICAL IND LTD) 13 September 2018 (2018-09-13) | 1-10 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 April 2023** | **09 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2023/005855**

| Patent document cited in search report | Publication date (day/month/year) | Patent family member(s) | Publication date (day/month/year) |
|---|---|---|---|
| JP 2020-123590 A | 13 August 2020 | US 2017/0062828 A1<br>paragraph [0231], example 2<br>EP 3154113 A1<br>CN 106463732 A<br>KR 10-2017-0012226 A | |
| JP 2017-174660 A | 28 September 2017 | (Family: none) | |
| JP 2018-142451 A | 13 September 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2020017418 A1
- JP 2012204303 A